# EUROPEAN PATENT APPLICATION

(11) **EP 3 187 294 A1**
(43) Date of publication of application: **05.07.2017**
(21) Application number: 15203117.5
(22) Date of filing: 30.12.2015
(51) Int. Cl.: B23F 21/12, B23F 5/20, B23C 5/10

(54) **A METHOD OF SHAPING A GEAR**

(71) Applicant: Bomar S.A. w upadlosci ukladowej, 41-400 Myslowice (PL)
(72) Inventor: LESNIAK, Tomasz, 45-265 Opole (PL); MALOLEPSZY, Stanis aw, 43-600 Jaworzno (PL); NIEMCZYK, Piotr, 43-230 Goczalkowice-Zdroj (PL); WEGRZYNEK, Bogdan, 33-300 Nowy Sacz (PL)
(74) Representative: Korga, Leokadia

(57) **Abstract**

The invention pertains to a method of formation of cylindrical involute toothed gears with straight teeth with a longitudinal modification of teeth.

A method of formation of cylindrical involute toothed gears with straight teeth with a longitudinal modification of teeth characterized in that machining of cylindrical involute toothed gears with straight teeth on a CNC machine is performed with a spherically shaped end mill where for each passage of the tool along the tooth line the wheel is turned around its axis so that the generating line of the milled point on the outline of the tooth of the wheel in the middle of the width of the wheel rim is tangent to the basic cylinder of the wheel and perpendicular to the axis of the mill and, simultaneously passes through the center of the wheel outline of the mill and the tool moves in each passage during milling of the tooth in a plane that is tangent to the base cylinder of the wheel so as to achieve a longitudinal modification of the tooth the tool moves along the tooth of the wheel along an arc with a diameter that depends on the required modification, namely the required deviation from a straight line, at the ends of the teeth.

## Description

The invention pertains to a method of shaping gear of cylindrical involute toothed gears with straight teeth with a longitudinal modification of teeth.

Polish patent application PL 215399 describes a method of hob machining of cylindrical toothed wheels and the invention pertains to a method of hob machining of cylindrical toothed wheels with a defined mill of cylindrical toothed wheels on numerically controlled milling machines and machining centers that is applied mostly in processes of hob finishing machining. The machining method consists in introduction of the geometrical data for the toothed gear space: normal module, number of teeth, teeth correction, reference outline parameters, definition of transition curve, parameters of modification of outline and geometry of the tool: diameter, length, corner radius, corner angle, and definition of the coordinate system: location of the origin of the coordinate system, the directions and senses of axes X, Y, and Z in relation to the machine zero point, and the machining parameters: rotational speed of the tool, feed, number of hobs per one tooth space, calculations are performed that lead to generation of a string of instructions that control the work of the milling machine, and then preparation is performed for machining that consists in setting the work piece chuck on the turntable of the milling machine so that the axis of the toothed wheel to be machined overlaps the axis of rotation of the turntable and, at the same time, passes through the origin of the X, Y, Z coordinate system, then the toothed wheel to be machined is set and fastened in the work piece chuck in a specific position in relation to the X, Y, Z coordinate system (23) in accordance with the data, then the performance of a string of instruction is initiated where the tool, which at the same time performs the main rotating movement around its own axis, moves to a position defined in relation to the toothed wheel being machined, whereby before the movement is performed the tool and the toothed wheel being machined move to a coupled position in a selected point of contact located on the outline of the tooth of the left side of the outline with a surface formed by rotating cutting edges of the tool, then the tool moves at a working feed rate in a plane that is parallel to the plane formed by axes X and Y with tangentiality maintained in the selected point of the outline of the tooth space, and after the movement is completed, the tool withdraws to a position where it is not in collision with the toothed wheel being machined and the work piece chuck, then successive actions are performed until all tooth spaces of the toothed wheel are machined on their left side, then the right sides of the outlines of the tooth spaces are machined by a collision-free movement of the tool to the opposite side of the toothed wheel being machined after movement of the tool through the plane passing through the point, formed by axes X and Z from the left side to the right side, then the process of machining of the right sides of the outlines of the tooth spaces is performed in accordance with appropriate activities, whereby performance of passages of the right side of the tooth spaces is coupled with the tool in successive contact points, and after all passages are made for the left sides and the right sides of the tooth spaces the tool withdraws to a safe position.

Patent application PL 216311 describes a method of plastic formation of internal teeth of toothed wheels using a transverse rolling method characterized in that a semi-finished product, in the form of a sleeve, is placed between three individual retaining rollers or on three retaining rollers located on the circumference of the semi-finished product which move in the same direction with a constant speed (n2) while a work roller with external teeth - the tool is placed inside the semi-finished product and the work roller rotates in a direction opposite to the direction of movement of the retaining rollers at the speed (n1) and performs reciprocating movements at the speed (V) in the radial direction of the semi-finished product, the rotating movement of the retaining rollers and of the work roller with external teeth causes the semi-finished product to rotate with the speed (n3), while the forward movement of the work roller with external teeth forms the internal teeth inside the semi-finished product, as a result of which a product is obtained in the form of a toothed wheel with internal teeth, the forward movement of the work roller with external teeth continues until it reaches its end position, in which the formed teeth reach their nominal height, at that time the forward movement stops and the rotating movement of the tool - work roller with external teeth - is maintained and at this time, the work roller calibrates the internal rim - the product. The forming process is achieved in an arrangement where three retaining rollers, the work roller with external teeth, and the semi-finished product in the form of a sleeve are driven.

Patent application PL 163413 describes a method for pulling internal teeth, especially of toothed wheel. The method consists in that the machined item is fastened in a rotating-dividing device with the possibility of linear repositioning and is pulled in several work passages with a set of pullers set symmetrically on a free mount. After each working passage of the set of pullers, the machined item withdraws from the work zone and moves by a specific angle, the set of pullers returns to the start position, the machined item returns to the work zone, and the next work movement of the set of pullers is performed. Then the cycle is repeated until teeth are made on the entire circumference.

Involute toothed gears with straight teeth are widely used in many types of equipment. They are machined using various shape and hob methods, whereby classic machining methods generally do not allow for longitudinal modification of the teeth of the wheels. The most efficient and accurate method is the hob method of machining of wheels with modular hobbing cutters. Wheels with very large modules are most often made using profile cutters and in such a case the accuracy and efficiency of the machining are low, whereby traditionally milling is performed on hob milling machines. Currently there is a worldwide trend to perform machining of toothed wheels and gears from specialized milling machines to universal CNC machines.

The a method of shaping gear of cylindrical involute toothed gears with straight teeth with a longitudinal modification of teeth according to the invention is characterized in that machining of cylindrical involute toothed gears with straight teeth on a CNC machine is performed with a spherically shaped end mill where for each passage of the tool along the tooth line the wheel is turned around its axis so that the generating line of the milled point on the outline of the tooth of the wheel in the middle of the width of the wheel rim is tangent to the basic cylinder of the wheel and perpendicular to the axis of the mill and, simultaneously passes through the center of the wheel outline of the mill and the tool moves in each passage during milling of the tooth in a plane that is tangent to the base cylinder of the wheel so as to achieve a longitudinal modification of the tooth the tool moves along the tooth of the wheel along an arc with a diameter that depends on the required modification, namely the required deviation from a straight line, at the ends of the teeth.

Wheels with tooth modifications are characterized by localized traces of contact of mating teeth of gear wheels and are not sensitive to installation errors.

## Claims

1. A method of shaping gear with straight teeth with a longitudinal modification of teeth **characterized in that** machining of cylindrical involute toothed gears with straight teeth on a CNC machine is performed with a spherically shaped end mill where for each passage of the tool along the tooth line the wheel is turned around its axis so that the generating line of the milled point on the outline of the tooth of the wheel in the middle of the width of the wheel rim is tangent to the basic cylinder of the wheel and perpendicular to the axis of the mill and, simultaneously passes through the center of the wheel outline of the mill and the tool moves in each passage during milling of the tooth in a plane that is tangent to the base cylinder of the wheel so as to achieve a longitudinal modification of the tooth the tool moves along the tooth of the wheel along an arc with a diameter that depends on the required modification, namely the required deviation from a straight line, at the ends of the teeth.
